# FASCICULE DE BREVET EUROPEEN

(11) **EP 0 652 150 B1**
(45) Date de publication et mention de la délivrance du brevet: **02.04.1997**
(21) Numéro de dépôt: 94402470.2
(22) Date de dépôt: 02.11.1994
(51) Int. Cl.: B62D 25/08

(54) **Façade avant perfectionnée pour véhicule à moteur thermique**
Vorderfront für Fahrzeug mit Verbrennungsmotor
Front part of vehicle with internal combustion engine

(30) Priorité: 05.11.1993 FR 9313206
(43) Date de publication de la demande: 10.05.1995
(73) Titulaire: ECIA - EQUIPEMENTS ET COMPOSANTS POUR L'INDUSTRIE AUTOMOBILE, F-25400 Audincourt (FR)
(72) Inventeur: Pinard, Eric, F-25150 Pont de Roide (FR)
(74) Mandataire: Polus, Camille

(56) Documents cités:
- DE-A- 4 100 562
- FR-A- 2 576 575
- FR-A- 2 655 605
- FR-A- 2 668 436
- FR-A- 2 671 044
- FR-A- 2 677 943

## Description

La présente invention concerne les véhicules automobiles terrestres à moteur thermique et, plus particulièrement, une façade avant perfectionnée pour ces derniers.

En matière de véhicules automobiles terrestres à moteur thermique, il est connu que ceux-ci sont équipés d'une façade avant ou antérieure dont le rôle est multiple. Une telle façade avant sert habituellement à réunir les flancs de la structure ou coque à des éléments de carrosserie tels que des ailes, pare-chocs, calandre. Cette façade doit aussi être à même de supporter des équipements tels que notamment des blocs optiques, un groupe motoventilateur pulseur d'air simple ou multiple, un filtre à air, un radiateur, un avertisseur sonore, etc.

Des tentatives ont déjà été faites pour construire une telle façade avant qui réussit à concilier tous ces desiderata parfois quelque peu contradictoires.

Des exemples de solutions pour fabriquer une telle façade avant pour véhicule automobile terrestre à moteur thermique sont par exemple décrits dans les documents FR 2 655 605, FR 2 668 436, FR 2 671 044 et FR 2 677 943.

Si les solutions de façade avant qui sont l'objet des documents indiqués conviennent, elles ne sont pas toutefois exemptes d'inconvénients. En effet, la tendance contemporaine des techniques de montage des véhicules automobiles fait, de plus en plus, appel à des robots ou à des automates programmables qui se substituent progressivement aux opérateurs travaillant sur les chaînes de production, et cela pour des interventions de plus en plus nombreuses et complexes. Actuellement, au lieu de monter successivement les divers composants ou équipements sur la structure ou coque d'un véhicule, on tend à préassembler ces divers composants en sous-ensembles et ensembles autonomes qui, après avoir été réunis en entités et éventuellement vérifiés, sont placés tels quels et réunis à la structure ou coque du véhicule.

FR-A-2 576 575 décrit une façade avant pour véhicule automobile terrestre à moteur thermique selon le préambule de la revendication 1, avec notamment un bâti-support et un pare-chocs, le bâti-support présentant une configuration générale en π avec une traverse médiane et deux jambes latérales délimitant ensemble un ajour.

Le but de l'invention est de confectionner une façade avant perfectionnée pour véhicule automobile terrestre à moteur thermique qui remédie à la plupart des inconvénients que présentent les solutions antérieures et qui permettent des processus de production modernes et autorisent des interventions aisées pour l'entretien et/ou la réparation.

L'invention a pour objet une façade avant perfectionnée pour véhicule automobile terrestre à moteur thermique avec notamment un bâti-support et un pare-chocs, le support présentant une configuration générale en π avec une traverse médiane et deux jambes latérales délimitant ensemble un ajour. Cette façade est remarquable en ce que le bâti-support est équipé d'un panneau qui est destiné à combler cet ajour et qui présente une cuvette destinée à recevoir un radiateur et au moins un groupe moto-ventilateur, en ce que cette traverse médiane porte une demi-coquille postérieure et en ce que ce panneau porte une autre demi-coquille antérieure qui ensemble avec la demi-coquille postérieure forment toutes deux un logement pour un filtre à air pour l'air d'alimentation du mélange explosif du moteur qui est équipé d'au moins une entrée et d'au moins un évent pour la circulation de l'air d'alimentation du mélange explosif alimentant le moteur et en ce que le pare-chocs est équipé d'une embouchure pour le prélèvement de cet air d'alimentation et qui est raccordée à cette demi-coquille antérieure.

D'autres caractéristiques de l'invention ressortiront de la lecture de la description et des revendications qui suivent ainsi que de l'examen des figures du dessin, donnés seulement à titre d'exemple, où :

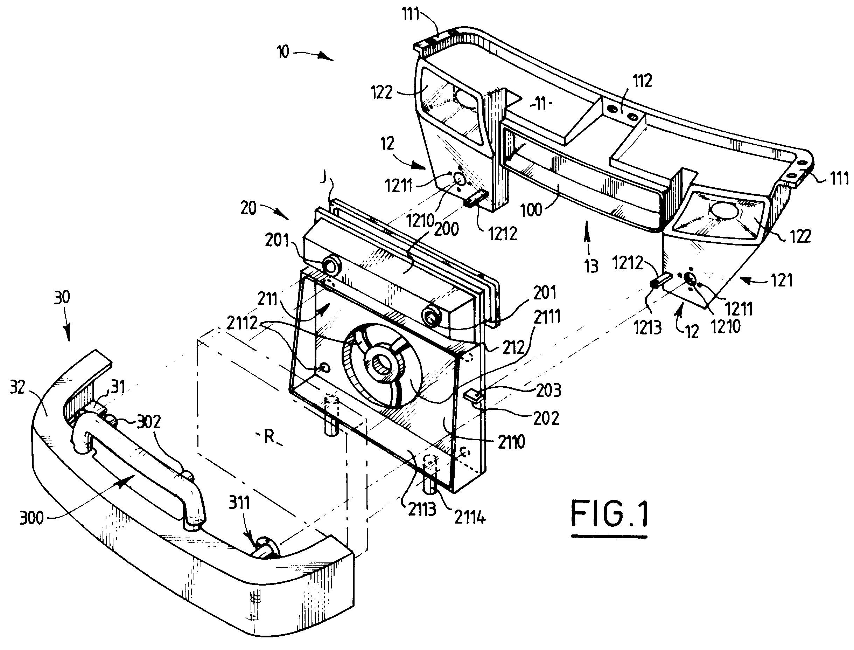

- la Figure 1 est une vue perspective éclatée schématique d'un mode de réalisation d'une façade avant perfectionnée selon l'invention; et
- la Figure 2 est une section verticale longitudinale partielle schématique du mode de réalisation de la Figure 1, assemblé.

Les véhicules automobiles terrestres à moteur thermique et leur façade avant étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'une façade avant perfectionnée selon l'invention, avant d'en exposer la fabrication au besoin, et la constitution et le fonctionnement.

Dans ce qui suit, toutes les indications portant sur une orientation relative telles que avant, antérieure, arrière, postérieure, latérales ou verticale bas, haut, longitudinale etc, sont faites par rapport aux axes de référence traditionnels utilisés pour un véhicule automobile terrestre en position de circulation.

Une façade avant perfectionné selon l'invention est destinée à être montée sur une coque ou structure de véhicule classique qui comprend notamment à l'avant des longerons, et qui est destinée à la supporter ainsi qu'à supporter directement ou indirectement des pièces de carrosserie telles que des ailes, un capot de compartiment moteur ou un hayon de coffre, une calandre et des pare-chocs par exemple.

Comme on le voit, une façade avant perfectionnée selon l'invention comprend, essentiellement, un bâti-support 10, un panneau 20, un pare-choc 30 et s'il y a lieu au moins un raccord 40.

Le bâti-support 10 présente une configuration générale en π avec une traverse 11 médiane et deux jambes 12 latérales qui délimitent ensemble toutes trois, un ajour 13. La traverse médiane 11 comprend notamment des zones de fixation 111 telles qu'un rebord, destinées à recevoir des ailes non dessinées, et un emplacement 112 destiné à recevoir une serrure non représentée pour le maintien en position fermée d'un capot ou similaire non représenté. Comme cela est clairement illustré sur les figures du dessin, la traverse médiane 11 porte une demi-coquille 100 postérieure. Comme on le comprendra par la suite, cette demi-coquille postérieure 100 ouverte vers l'avant est destinée à constituer un logement pour un filtre à air F de tout type approprié connu placé sur le circuit de circulation de l'air du mélange explosif alimentant le moteur, par exemple en amont d'un carburateur, repéré par rapport au sens de circulation de l'air et du mélange. La demi-coquille postérieure 100 est munie d'au moins un évent 101 pour la circulation de l'air "propre" ayant traversé le filtre comme on le comprendra par la suite. Chacune des deux jambes latérales 12 est munie d'une embase 121 appropriée pour le montage du bâti-support 10 sur les longerons ou similaires de la coque ou structure, comme il est bien connu. A cet effet, chaque embase est transpercée d'une fenêtre 1210 et de trous 1211 qui l'entourent. Pour les raisons qui apparaîtront par la suite, chaque embase est aussi munie d'une patte 1212 ou similaire, dirigée vers l'avant, dans laquelle est ménagée une fente 1123 ou analogue. Chacune de ces jambes est aussi munie, de préférence à proximité de la traverse médiane à laquelle elle est raccordée, d'un cuvelage 122 ou similaire destiné à recevoir un bloc optique.

Comme on le voit la traverse médiane 11 et les deux jambes latérales 12 forment un pont et délimitent ensemble un ajour 13.

Le panneau 20 est destiné à combler cet ajour 13 et est monté, de toute manière appropriée convenable, sur le bâti-support 10. A cet effet, le panneau est muni de languettes 202 ou similaires, dans chacune desquelles est percé un trou 203 ou analogue. Ces languettes et trous sont destinés à coopérer avec les pattes et fentes pour le montage du panneau sur le bâti-support. La fixation est assurée à l'aide de vis et écrous ou analogues engagés dans les trous et fentes. Comme cela est clairement illustré sur les figures du dessin, le panneau 20 comprend une cuvette 211 destinée à recevoir un radiateur R de tout type approprié classique qui sert d'échangeur notamment pour le refroidissement du moteur thermique assurant l'entraînement du véhicule automobile terrestre. La cuvette 211 présente un fond 2110 qui est transpercé d'un passage 2111 pour la circulation de l'air de refroidissement qui a traversé le radiateur, et qui est aussi équipé d'ancrages 2112 destinés au montage de ce radiateur et au montage d'un groupe motoventilateur simple ou multiple non illustré, constitué comme il est bien connu d'au moins un moteur électrique animant une hélice ou turbine pour améliorer ou accélérer la circulation de l'air de refroidissement du radiateur. La cuvette est aussi munie d'une bordure 2113 avec des pieds 2114 ou similaires, extérieurs destinés à coopérer s'il y a lieu avec une entretoise E transversale qui joint les longerons de la coque ou structure afin d'assurer une reprise d'efforts. La cuvette à radiateur 211 est surmontée d'une demi-coquille 200 qui, avec la demi-coquille 100 du bâti-support 10 forme un logement pour un filtre à air F classique de tout type approprié. La demi-coquille antérieure 200 ouverte vers l'arrière est munie d'au moins une entrée 201 pour la circulation de l'air d'alimentation pour le mélange explosif. Lorsque les deux demi-coquilles sont appliquées l'une contre l'autre pour délimiter le logement à filtre à air, l'étanchéité est assurée par un joint J approprié.

Pour les raisons qui apparaîtront par la suite, la demi-coquille 200 et la cuvette 211 sont réunies par une articulation 212 comme illustré qui permet un basculement relatif d'amplitude donnée a de la demi-coquille 200 antérieure par rapport à la cuvette, de préférence selon un axe transversal pratiquement horizontal. L'articulation est faite d'une charnière, paumelle, gond ou similaire ou bien est obtenue par un amincissement local du matériau dont est fait le panneau, par exemple une matière synthétique appropriée.

Le pare-chocs 30 comprend une poutre 31 résistante de préférence munie d'un revêtement 32 ou peau comme il est connu, avec au besoin interposition d'un matériau apte à absorber de l'énergie mécanique, comme il est bien connu. Une liaison 311 de tout type approprié convenable telle des embouts avec des socles transpercés de trous, comme illustré, permet le montage du pare-chocs directement sur la coque ou structure ou indirectement par l'entremise du bâti-support. Ce sont ces embouts et socles de la liaison qui coopèrent avec les fenêtres et trous des embases. Le pare-chocs est muni d'une embouchure 300 pour le prélèvement de l'air d'alimentation pour le mélange explosif qui est raccordée à la demi-coquille antérieure 200 pour lui fournir de l'air "sale" qui sera purifié par la traversée du filtre F. Au moins un orifice 301 permet l'admission de l'air d'alimentation et au moins un conduit 302 en permet l'évacuation.

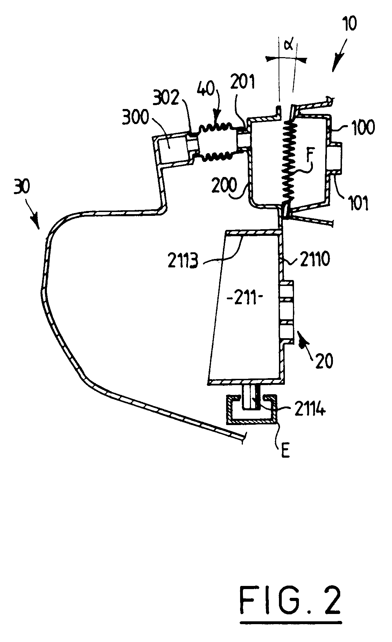

La liaison entre l'embouchure 300 et en particulier son conduit d'évacuation 302 est assurée à l'aide d'un raccord flexible 40 par exemple en accordéon relié à l'entrée 201 de la demi-coquille antérieure 200 comme cela apparaît clairement notamment sur la Figure 2.

Tous les constituants d'une façade avant perfectionnée selon l'invention sont fabriqués à l'aide de matériaux métalliques et/ou synthétiques appropriés auxquels s'il y a lieu des charges et/ou renforts sont incorporés, travaillés et mis en forme selon des techniques traditionnelles telles que par exemple découpe, emboutissage, estampage ou moulage, extrusion, thermoformage, selon la nature des matériaux utilisés.

Tous les constituants d'une façade avant perfectionnée pour véhicule automobile terrestre à moteur thermique suivant l'invention sont réunis, assemblés et montés en particulier comme cela ressort clairement de la Figure 2.

Par exemple on associe d'abord bâti-support et panneau puis ensuite pare-chocs et bâti-support avant de fixer le tout sur les longerons.

On observera en particulier que la présence de l'articulation 212 et du raccord flexible 40 permet de faire basculer la demi-coquille antérieure 200 notamment relativement à la demi-coquille 100 postérieure pour accéder à l'intérieur du logement qu'elles délimitent ensemble afin de procéder à la mise en place ou à l'échange du filtre à air F. Les deux demi-coquilles sont maintenues réunies par un verrou ou fermoir approprié ou similaire de manière à assurer l'étanchéité de leur jonction au besoin avec interposition d'un joint et/ou de chicanes, comme il est connu.

Comme cela ressort de ce qui a été exposé précédemment et aussi de l'examen des figures du dessin, on voit qu'une façade avant perfectionnée selon l'invention permet d'intégrer la ligne d'admission d'air pour l'alimentation du moteur thermique en mélange explosif, ce qui a pour avantage d'en diminuer le coût de fabrication et de faire gagner de la place. Cette solution permet aussi une réduction des coûts d'entretien et de réparation puisqu'en cas d'anomalies ou de dégâts, seule la partie défaillante de la façade avant est à changer.

Ce qui précède met bien en lumière les particularités de l'invention, l'intérêt qu'elle offre et les avantages qu'elle apporte.

## Revendications

1. Façade avant pour véhicule automobile terrestre à moteur thermique avec notamment un bâti-support et un pare-chocs, le bâti-support (10) présentant une configuration générale en π avec une traverse (11) médiane et deux jambes (12) latérales délimitant ensemble un ajour (13), caractérisée en ce que le bâti-support est équipé d'un panneau (20) qui est destiné à combler cet ajour (13) et qui présente une cuvette (211) destinée à recevoir un radiateur et un groupe moto-ventilateur, en ce que cette traverse médiane (11) porte une demi-coquille (100) postérieure et ce panneau (20) porte une autre demi-coquille (200) antérieure qui ensemble forment toutes deux un logement pour un filtre à air pour l'air d'alimentation du mélange explosif du moteur avec au moins une entrée (201) et au moins un évent (101) pour la circulation de l'air d'alimentation et en ce que le pare-chocs (30) est équipé d'une embouchure (300) pour le prélèvement de l'air d'alimentation qui est raccordée à cette demi-coquille antérieure (200).

2. Façade selon la revendication 1, caractérisée en ce que la demi-coquille antérieure (200) surmonte la cuvette (211) et est reliée à cette dernière (211) par une articulation (212).

3. Façade selon la revendication 2, caractérisée en ce que la demi-coquille postérieure (100) est ouverte vers l'avant et est transpercée par au moins un évent (101) et en ce que la demi-coquille antérieure (200) est ouverte vers l'arrière et est transpercée par au moins une entrée (201).

4. Façade selon l'une quelconque des revendications 1 à 3, caractérisée en ce que l'embouchure (300) comprend au moins un orifice (301) d'admission et au moins un conduit (302) d'évacuation d'air d'alimentation raccordé à la demi-coquille antérieure (200).

5. Façade selon l'une quelconque des revendications 1 à 4, caractérisée en ce qu'elle est équipée d'au moins un raccord (40) flexible reliant l'embouchure (300) à la demi-coquille antérieure (200).

6. Façade selon la revendication 5, caractérisée en ce que le raccord flexible (40) relie le conduit d'évacuation (302) à l'entrée (201).

7. Façade selon l'une quelconque des revendications 1 à 6, caractérisée en ce que chaque jambe (12) comprend une embase (121) destinée au montage sur la coque du véhicule et un cuvelage (122) destiné à recevoir un bloc optique, et en ce que la traverse médiane (11) comprend des zones de fixation (111) destinées au montage des ailes du véhicule et un emplacement (122) destiné à recevoir une serrure pour la fermeture du capot du véhicule.

8. Façade selon l'une quelconque des revendications 1 à 7, caractérisée en ce que la cuvette (211) comprend un fond (2110) transpercé d'un passage (2111) et muni d'ancrages (2112) destinés à recevoir un radiateur et un groupe moto-ventilateur, et une bordure (2113) entourant le fond (2110).

## Claims

1. Front structure for a land motor vehicle with combustion engine, especially having a supporting framework and a bumper, the supporting framework (10) having the overall configuration of a π with a middle crossmember (11) and two lateral legs (12) which together delimit an opening (13), characterized in that the supporting framework is equipped with a panel (20) which is intended to fill this opening (13) and which has a dished part (211) intended to receive a radiator and a motorized fan unit; in that this middle crossmember (11) carries a rear half shell (100) and this panel (20) carries another, front, half shell (200) which shells both together form a housing for an air filter for the engine combustible mixture inlet air with at least one inlet (201) and at least one vent (101) for the flow of the inlet air; and in that the bumper (30) is equipped with a mouth (300) for drawing off inlet air which mouth is connected to this front half shell (200).

2. Structure according to Claim 1, characterized in that the front half shell (200) is mounted above the dished part (211) and is connected to the latter (211) by an articulation (212).

3. Structure according to Claim 2, characterized in that the rear half shell (100) is open towards the front and has at least one vent (101) pierced right through it, and in that the front half shell (200) is open towards the rear and has at least one inlet (201) pierced right through it.

4. Structure according to any one of Claims 1 to 3, characterized in that the mouth (300) comprises at least one intake port (301) and at least one duct (302) for evacuating inlet air which is connected to the front half shell (200).

5. Structure according no any one of Claims 1 to 4, characterized in that it is equipped with at least one flexible coupling (40) connecting the mouth (300) to the front half shell (200).

6. Structure according to Claim 5, characterized in that the flexible coupling (40) connects the evacuation duct (302) to the inlet (201).

7. Structure according to any one of Claims 1 to 6, characterized in that each leg (12) comprises a base (121) intended for mounting on the bodyshell of the vehicle and a lining (122) intended to receive a lighting and signalling unit; and in that the middle crossmember (11) comprises fastening regions (111) intended for mounting the wings of the vehicle and a location (122) intended to receive a catch for closing the bonnet of the vehicle.

8. Structure according to any one of Claims 1 to 7, characterized in that the dished part (211) comprises a bottom (2110) with a passage (2111) pierced right through it and equipped with anchoring points (2112) intended to receive a radiator and a motorized fan unit, and a border (2113) surrounding the bottom (2110).

## Patentansprüche

1. Vorderfront für ein Landfahrzeug mit Verbrennungsmotor, mit insbesondere einem Tragrahmen und einem Stoßfänger, welcher Tragrahmen (10) im wesentlichen π-förmig ausgebildet ist und eine Traverse (11) im Mittelbereich sowie zwei seitliche Beine (12) aufweist, die gemeinsam einen Durchbruch (13) begrenzen, dadurch **gekennzeichnet**, daß der Tragrahmen mit einer Füllung (20) versehen ist, die bestimmt ist zum Ausfüllen des Durchbruchs (13), und die eine Schale (211) umfaßt, die bestimmt ist zur Aufnahme eines Kühlers und einer Motor-Ventilator-Gruppe, daß die mittlere Traverse (11) eine hintere Halbschale (100) und die Füllung eine weitere, vordere Halbschale (200) aufweist, die gemeinsam eine Aufnahme für ein Luftfilter für die Luftversorgung des explosiven Gemisches des Motors mit wenigstens einem Einlaß (201) und wenigstens einem Auslaß (101) für die Zirkulation der Zufuhrluft bilden, und daß der Stoßfänger (30) eine Öffnung (300) für die Ableitung der Zufuhrluft aufweist, die mit der vorderen Halbschale (200) verbunden ist.

2. Vorderfront nach Anspruch 1, dadurch **gekennzeichnet**, daß die vordere Halbschale (200) über der Schale (211) liegt und mit der Schale (211) durch eine Gelenkverbindung (212) verbunden ist.

3. Vorderfront nach Anspruch 2, dadurch **gekennzeichnet**, daß die hintere Halbschale (100) nach vorne offen ist und wenigstens einen Auslaß (101) aufweist, und daß die vordere Halbschale (200) nach hinten offen ist und wenigstens einen Einlaß (201) aufweist.

4. Vorderfront nach einem der Ansprüche 1 bis 3, dadurch **gekennzeichnet**, daß die Öffnung (300) wenigstens eine Einlaßöffnung (301) und wenigstens eine Auslaßleitung (302) für Zufuhrluft umfaßt, die mit der vorderen Halbschale (200) verbunden ist.

5. Vorderfront nach einem der Ansprüche 1 bis 4, dadurch **gekennzeichnet**, daß sie mit wenigstens einem flexiblen Anschluß (40) versehen ist, der die Öffnung (300) mit der vorderen Halbschale (200) verbindet.

6. Vorderfront nach Anspruch 5, dadurch **gekennzeichnet**, daß der flexible Anschluß (40) die Auslaßleitung (302) mit dem Einlaß (201) verbindet.

7. Vorderfront nach einem der Ansprüche 1 bis 6, dadurch **gekennzeichnet**, daß jedes Bein (12) eine Grundfläche (121) zur Montage an dem Fahrgestell des Fahrzeugs und eine Wanne (122) zur Aufnahme eines optischen Blocks aufweist und daß die mittlere Traverse (11) Befestigungsbereiche (111) für die Montage der Kotflügel des Fahrzeugs und eine Montageposition (122) zur Aufnahme einer Verschlußeinrichtung für das Schließen der Haube des Fahrzeugs aufweist.

8. Vorderfront nach einem der Ansprüche 1 bis 7, dadurch **gekennzeichnet**, daß die Schale (211) einen Boden (2110), der von einem Durchlaß (2111) durchdrungen und mit Verankerungen (2112) zur Aufnahme eines Kühlers und einer Ventilator-Motor-Gruppe versehen ist und einen Rand (2113) umfaßt, der den Boden (2110) umgibt.
